## Europäisches Patentamt
## European Patent Office
## Office européen des brevets

(11) Veröffentlichungsnummer: **0 163 885**
**A1**

(12) **EUROPÄISCHE PATENTANMELDUNG**

(21) Anmeldenummer: **85104779.5**

(22) Anmeldetag: **19.04.85**

(51) Int. Cl.⁴: **G 06 K 9/46**

(30) Priorität: **11.05.84 DE 3417545**

(43) Veröffentlichungstag der Anmeldung: **11.12.85**
**Patentblatt 85/50**

(84) Benannte Vertragsstaaten: **BE CH DE FR GB IT LI NL SE**

(71) Anmelder: **Siemens Aktiengesellschaft, Berlin und München Wittelsbacherplatz 2, D-8000 München 2 (DE)**

(72) Erfinder: **Grasmüller, Hans, Ing.-grad., Kapellenstrasse 4, D-8083 Mammendorf (DE)**
Erfinder: **Beutel, Wilhelm, Dipl.-Ing., Strassbergerstrasse 32, D-8000 München 40 (DE)**
Erfinder: **Hohberger, Karl, Ing.-grad., Dientzenhoferstrasse 6, D-8152 Feldkirchen-Westerham (DE)**
Erfinder: **Köllensperger, Paul, Dipl.-Ing., Engadiner Strasse 36, D-8000 München 71 (DE)**
Erfinder: **Reischl, Anna, Gerhardstrasse 12, D-8000 München 90 (DE)**
Erfinder: **Rummel, Peter, Dipl.-Ing., Miesbacher Strasse 94, D-8184 Festenbach (DE)**

(54) **Anordnung zur Segmentierung von Linien.**

(57) Für den Einsatz in einem Sensorsystem zur Auswertung von Grauwertbildern wurde ein neues Grobsegmentierungsgerät entwickelt. Es basiert im Gegensatz zu bisher angewandten Methoden auf dem Pipeline-Prinzip. Im von der Kamera aufgenommenen Bild stellen sich Kanten eines Objektes als eine Punktfolge hohen Kontrastes gegenüber der Umgebung dar. Diese Kanten werden zunächst von der sogenannten Kantenverfolgung gesucht und verfolgt. Anschließend wird in der Grobsegmentierung diese Linie in möglichst große zusammenhängende Stücke gleicher Krümmung und Stücke mit starker Richtungsänderung eingeteilt. Auf dieser Grundlage wurde eine Schaltung aufgebaut.

| | | |
|---|---|---|
| Grobsegmentierung | GS | —Fig 2 |
| Berechnung der Mittelwerte | MWB | —Fig 3 |
| Klassifizierung | KLASS | —Fig 4 |
| Verschmelzung | VER | —Fig 5 |
| Approximation | APP | —Fig 6 |

Siemens Aktiengesellschaft          Unser Zeichen
Berlin und München                  VPA
                                    84 P 1 3 6 3 E

**Anordnung zur Segmentierung von Linien.**

Die Erfindung betrifft eine Anordnung zur Segmentierung, Klassifizierung und Approximation von Linien, die durch eine Punktfolge gegeben sind und wobei jeder Punkt durch seine Koordinaten und den Richtungswinkel bestimmt ist.

Die Leistung der bisher am Markt verfügbaren visuellen Sensoren zur Lageerkennung von Werkstücken reicht für den Einsatz in flexiblen Fertigungen im allgemeinen nicht aus, um einen wirtschaftlichen und technisch sinnvollen Einsatz dieser Geräte zu ermöglichen.

Die bisher am Markt verfügbaren Sensoren bilden die dreidimensionale Szene, welche die Werkstücke enthält, in ein Binärbild ab, in dem sich das zu erkennende Werkstück als weiße Fläche vom schwarzen Hintergrund oder umgekehrt abhebt. Dieses flächenhafte, die Silhouette des Werkstückes beschreibende Muster wird nun mit vergleichsweise einfachen Algorithmen (zum Beispiel Schwerpunktsberechnung zur Lagebestimmung, Ermittlung der Trägheitsachsen bzw. "Polarcheck" zur Drehlageermittlung) ausgewertet. Diese Art der Auswertung setzt voraus, daß sich verschiedene Werkstücke nicht berühren oder überlappen, daß andererseits aber ein Werkstück auch nicht durch die Binärisierung in mehrere Flächen zerfällt. Für die Erkennung von nicht vereinzelten Werkstücken muß daher vom Grauwertbild, in dem Kanten sichtbar sind, ausgegangen werden.

Zur Auswertung von Grauwertbildern existieren zahlreiche Algorithmen, die jedoch im allgemeinen außerordentlich

Wed 1 Plr/14.3.1984

0163885
84 P 1 3 6 3 E

rechenintensiv sind und normalerweise für den Einsatz in
der Fertigungsautomatisierung wegen des erforderlichen
Geräte- und Zeitaufwandes nicht in Frage kommen.

Der Erfindung liegt die Aufgabe zugrunde, ein an unterschiedliche Gegebenheiten anpaßbares, genügend schnelles, wirtschaftliches Sensorsystem zur Erkennung und Inspektion von sich überlappenden, nicht vereinzelten Werkstücken zu entwickeln. Dabei ist es das Ziel der beschriebenen Segmentierung, die Einteilung des Verlaufs einer beliebigen Linie, zum Beispiel des Umfangs eines Werkstückes in definierte Stücke (Segmente mit definierten Eigenschaften, zum Beispiel in Geradenstücke, Kreisstücke und Ecken) aufzuteilen und diese Stücke in einer Gleichungsform zu beschreiben. Diese Linien werden zunächst zum Beispiel von einer sogenannten Kantenverfolgung gesucht und verfolgt. Dabei wird mit Hilfe eines Flächenfilters aus dem Grauwertbild einer Szene ein Gradientenbild erzeugt. Aus diesem Gradientenbild werden Linien extrahiert. Eine derartige Anordnung geht von der Annahme aus, daß technische Objekte in der Regel durch ihre Kanten und die Kanten wiederum durch Merkmale wie Gerade, Kreis, Kreisbogen und Ecken beschreibbar sind. Eine derartige Anordnung ist Gegenstand der Patentanmeldung P 34 15 467.1.

Das Ergebnis der beschriebenen Segmentierung sind aus einer Linie entstandene Gerade, Kreis, Kreisbögen und Ecken, die in der Literatur auch als Primitive bezeichnet werden.

Diese Primitive stellen die Merkmale für die anschließende, durch gespeicherte Werkstückmodelle gesteuerte Szenenanalyse dar. Dabei wird mit Hilfe eines Suchbaumverfahrens versucht, aus dem im Bild vorhandenen Merkmalsvorrat ein dem Modell entsprechendes Muster zusammenzusetzen, dessen Lage und Orientierung dann als die Lage und Orientierung des gesuchten Werkstückes interpretiert wird. Eine in der Analyse mitlaufende Ähnlichkeitsbewertung der verwendeten Merkmale wird zu einer Aussage darüber, ob das Werkstück ausreichend sicher erkannt wird, verarbeitet.

Über die Formerkennung hinaus besteht die Möglichkeit, weitere Merkmale, wie zum Beispiel Grauwert bzw. Grauwertdifferenzen, oder Größen, die aus Grauwerten abgeleitet werden können (mittlerer Grauwert einer Fläche, Texturen, Farben) zur Erkennung einzusetzen.

Die beschriebene Aufgabe wird erfindungsgemäß durch die Merkmale der Patentansprüche gelöst, die in der Beschreibung besonders erläutert sind.

Die Erfindung wird anhand der Figuren erläutert. Es zeigen:

Figur 1 zeigt eine Übersicht in Form eines Blockschaltbildes der gesamten Anordnung,

Figur 2 eine Anordnung zur Segmentierung (Grobsegmentierung),

Figur 3 eine Anordnung zur Berechnung der Mittelwerte, die für weitere Segmentierungsschritte benötigt werden,

Figur 4 eine Anordnung zur Klassifizierung,

Figur 5 eine Anordnung zur Verschmelzung von Segmenten und

Figur 6 eine Anordnung zur Approximation von Segmenten.

0163885
84 P 1 3 6 3 E

## Gesamtanordnung:

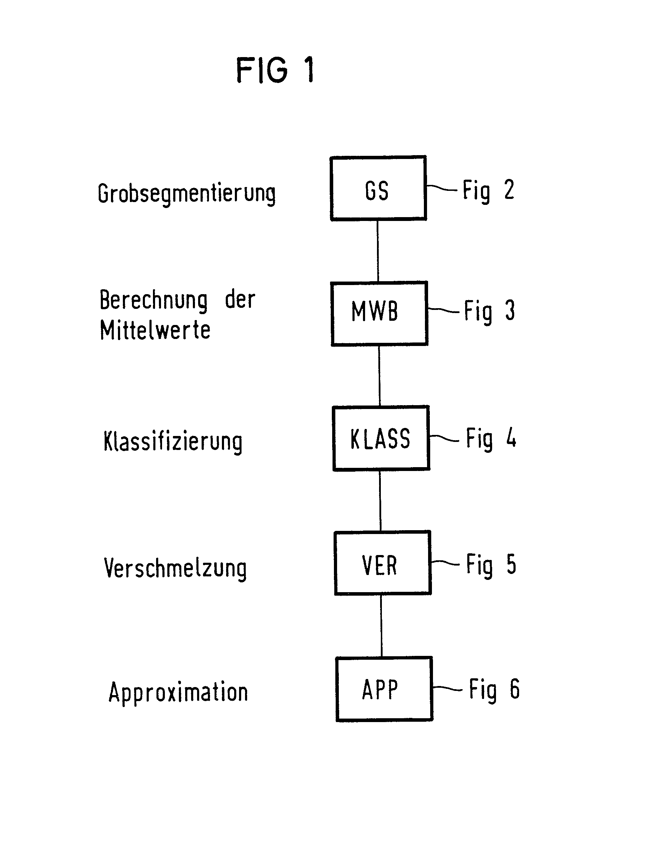

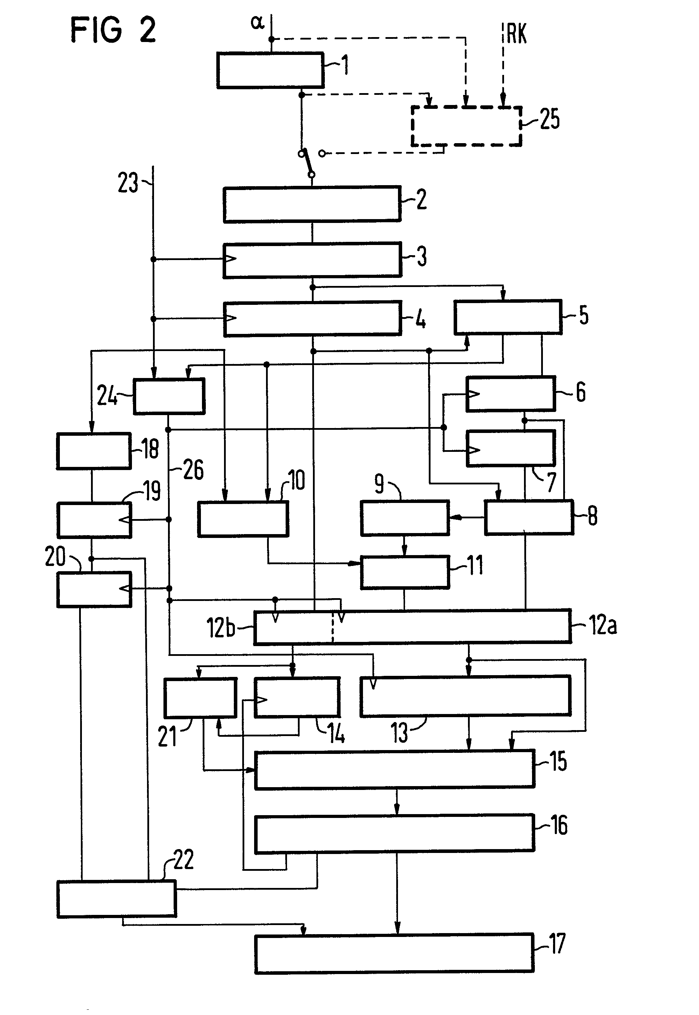

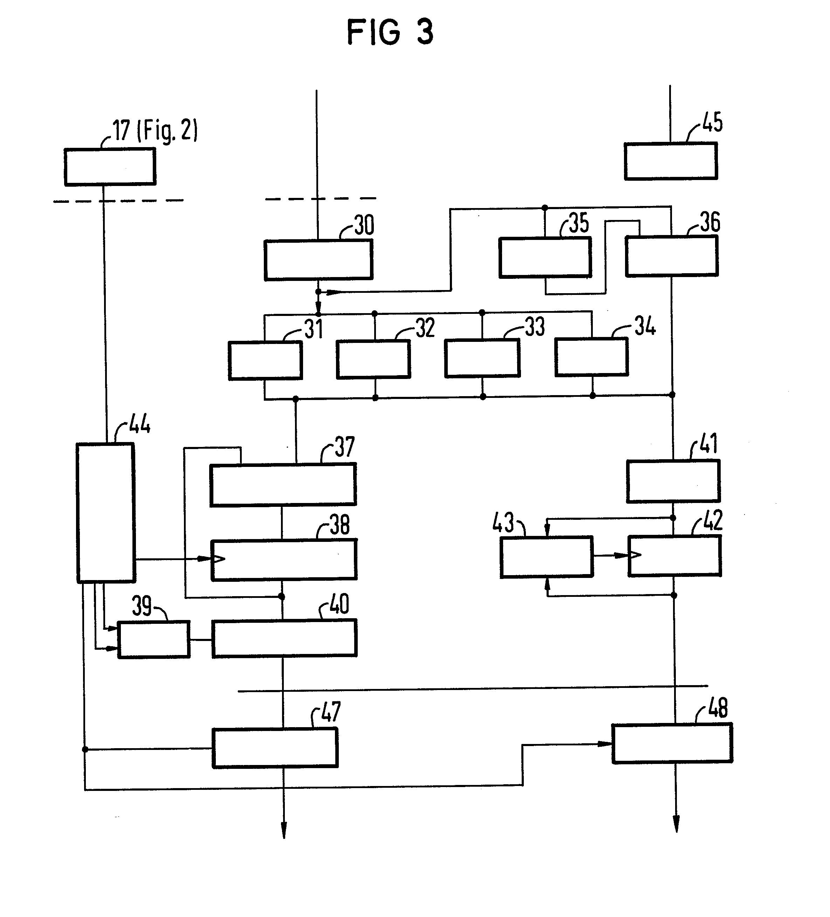

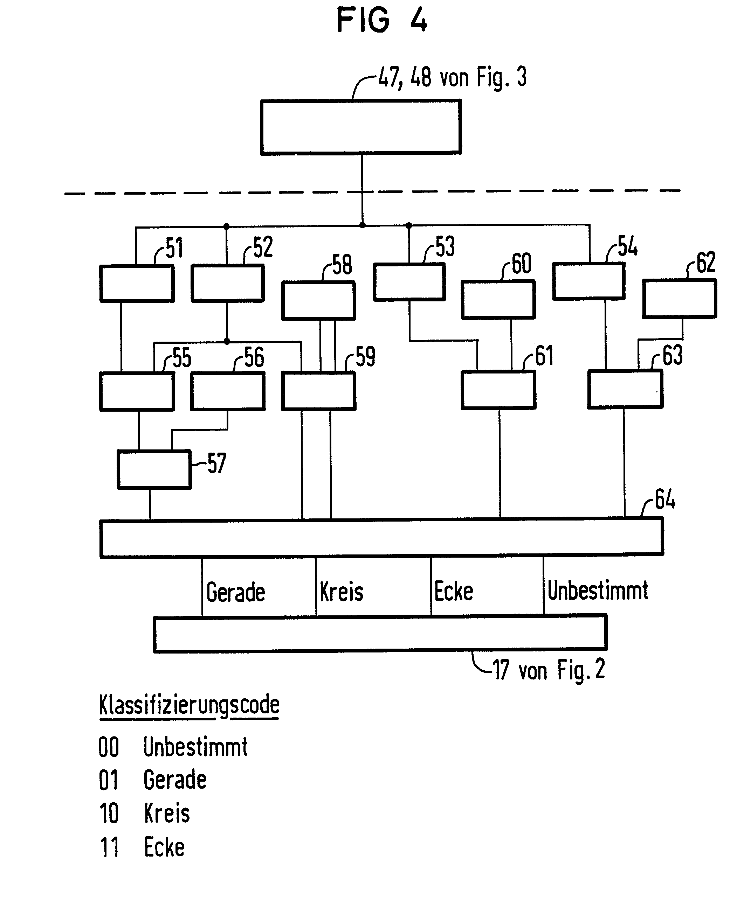

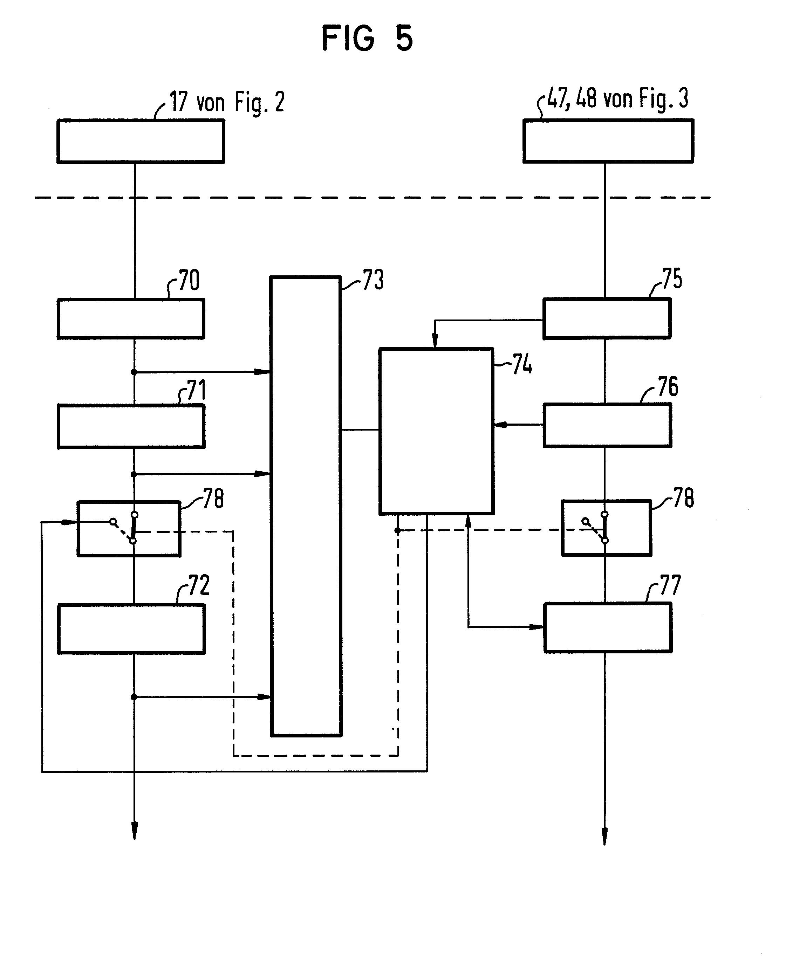

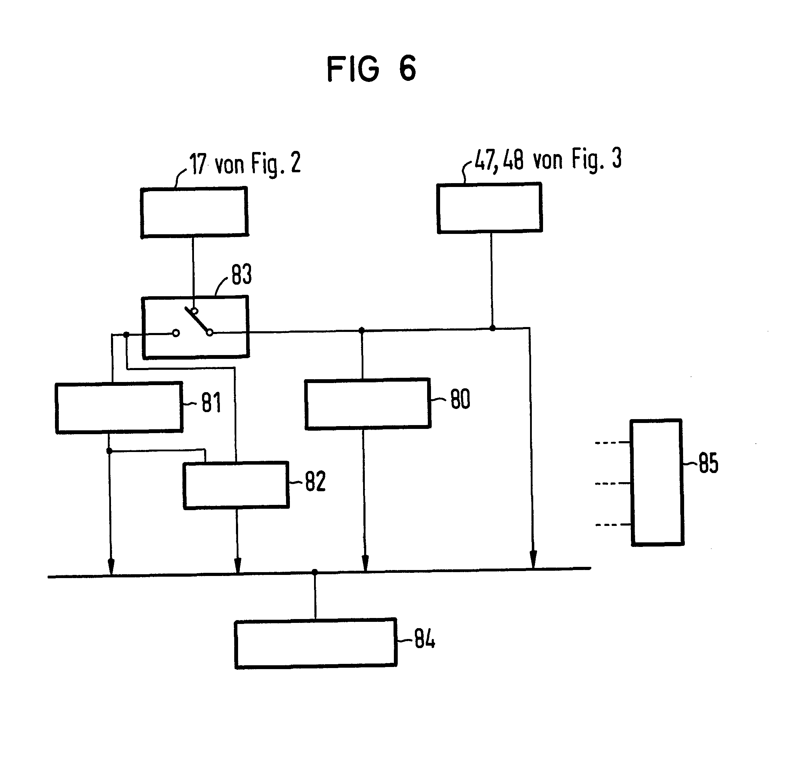

In der Figur 1 kommen die Eingangsdaten der gewählten Anordnung aus einer Kantenverfolgung in Form einer Linienliste in eine Grobsegmentierung GS, die in der Figur 2 näher erläutert ist. An diese Grobsegmentierung schließt sich eine Mittelwertberechnung MWB, die Gegenstand der Figur 3 ist. Die Klassifizierung KLASS wird besonders in Figur 4 ausgeführt. Die Verschmelzung VER ist detailliert in der Figur 5 beschrieben und die Approximation APP in der Figur 6.

## Grobsegmentierung:

Erläuterung der Figur 2: Mit 1 ist ein Differenzierer bezeichnet, der die Eingangsdaten, das ist der Richtungswinkel $\alpha$ eines jeden Punktes einer Linie differenziert und der die differenzierten Signale zur Störunterdrückung glättet. Die Reihenfolge Differenzierung - Glättung oder Glättung - Differenzierung ist beliebig. Das Ergebnis ist die Winkeldifferenz $\Delta\alpha$ zweier aufeinanderfolgender Punkte in einer Linie. Dieser Differenzierer besteht zum Beispiel aus einem Subtrahierer, Speichern und Addierern.

Anschließend an diesen Differenzierer ist ein Klassendetektor 2 vorgesehen, der zum Beispiel durch einen Speicher realisiert ist. Unter Klassen sind in diesem Abschnitt Krümmungsklassen zu verstehen. Er könnte aber auch aus einem Vergleichswinkelgeber und einem Komparator aufgebaut sein. Auf den Klassendetektor 2 folgen die Speicher 3 und 4 zum Klassenvergleich aufeinanderfolgender Punkte. Durch einen Komparator 5 werden Klassenänderungen erkannt. Die Speicher 6 und 7 dienen mit einem Komparator 8 zur Tendenzerkennung. Als Tendenz wird die Folge der Änderungen bezeichnet. Mit dem Komparator 8 ist ein Grenzlängenspeicher 9 verbunden. Der Komparator 8 und der Grenzlängenspeicher 9 sind zum Beispiel in einem PROM realisiert. Von dem Komparator 5 wird auch bei jedem Klassenwechsel ein Längenzähler 10 zurückgesetzt, der aufeinanderfolgende Punkte gleicher Klasse zählt. Auf den Grenzlängenspeicher 9 und den Längenzähler 10 folgt ein Längenkomparator 11, der Linienstücke gleicher Klasse oberhalb der Grenzlänge als eigenständige Stücke einstuft. Die beschriebenen Bausteine 8, 9 und 11 können zum Beispiel auch in einem PROM geeigneter Größe zusammengefaßt sein. Aus der Tendenzerkennung 8, dem Längenkomparator 11 und dem Klassenspeicher 4 ergibt sich die Beschreibung eines aktuellen Teilstückes, das in einem Speicher 12a und 12b abgelegt ist. 12a enthält die Kodierung für die Tendenz und die Kennung für eigenständige Teilstücke. 12b enthält die Klasse dieses Teilstücks. Ein Speicher 13 enthält den Teil der Beschreibung des vorhergehenden Teilstückes, der in 12a abgespeichert war. In einem Speicher 14 ist eine Vergleichsklasse abgelegt. Ein programmierbarer Speicher 15 enthält den Algorithmus für den Eintrag in einen Segmentpunktspeicher 17 und die eventuelle Übernahme der Klasse aus dem Speicher 12b in den Vergleichsklassenspeicher 14. Die Taktsynchronisierung 16 ist zwischen den Speicher 15 und den Speicher 17 geschaltet und bewirkt die Umschaltung der Änderungsadressen aus den Speichern 19 und 20.

Ein Punktzähler 18 wird mit jedem Linienpunkt weitergeschaltet. In den Speicher 19 wird der Zählerstand bei jeder Klassenänderung übernommen. In dem Speicher 20 steht die vorhergehende Änderung.

Die im Speicher 15 realisierte Segmentpunktentscheidung wird aus den Daten des Speichers 12a, des Speichers 13 und dem Ergebnis eines Klassendifferenzkomparators 21 gesteuert. Mit 22 ist die Umschaltung zwischen den Speichern 19 und 20 bezeichnet. Über die Leitung 23 wird der Punkttakt zugeführt. Eine logische Schaltung 24 bildet aus dem Punkttakt und dem Änderungsausgang des Kompara-

0163885

tors 5 den Klassentakt 26. Er wird bei jeder Klassenänderung gebildet.

Der Verfahrensablauf mit einer Anordnung nach der Erfindung geht folgendermaßen vor sich:

Ausgangspunkt ist die zum Beispiel von der Kantenverfolgung gelieferte Linienliste. Diese Liste enthält die Winkel und Koordinaten aller zu einer Linie gehörenden Punkte in der Reihenfolge der gefundenen Punkte.

Punkt Nr.

| | | | | |
|---|---|---|---|---|
| 1 | $\alpha_1$ | x1 | y1 | RK1 |
| 2 | $\alpha_2$ | x2 | y2 | RK2 |
| 3 | $\alpha_3$ | x3 | y3 | RK3 |
| 4 | $\alpha_4$ | x4 | y4 | RK4 |
| 5 | $\alpha_5$ | x5 | y5 | RK5 |
| i | $\alpha_i$ | xi | yi | RKi |

Jeder Punkt ist also durch seinen Richtungswinkel $\alpha$,
die Koordinaten x, y und einen Richtungscode RK bestimmt.
Der Richtungswinkel $\alpha$ ist der Tangentenwinkel bzw. der
um 90° versetzte Normalenwinkel.

Zur Ermittlung der Segmentierpunkte werden nur die Richtungswinkel $\alpha$ verwendet. Zunächst werden die Differenzwinkel $\Delta\alpha$ zwischen aufeinanderfolgenden Punkten gebildet. Anschließend erfolgt eine Glättung über mehrere
Punkte. Damit kann zwar der Linienverlauf noch eindeutig
rekonstruiert werden, er ist aber nicht mehr abhängig von
der Drehlage. Dieser Differenzwinkel $\Delta\alpha$ gibt die
Krümmung der zu untersuchenden Linien an.

Idealisierter Verlauf
eines Linienzuges.
bestehend aus
3 Geraden (1, 3, 4)
und einem Kreis (2)
in $\alpha$ - und $\Delta\alpha$ -Dar-
stellung

Im Idealfall erscheinen Geradenstücke am Ausgang des
Differenzierers 1 (Figur 2) als Linien, die mit der
Abszisse zusammenfallen und Kreise als Parallele zur
Abszisse. Der Abstand zwischen beiden ist umgekehrt
proportional zum Radius. Ecken erscheinen als Nadeln.
Real ist der Übergang zwischen Ecken und kleinen Kreisstücken fließend.

Zur Vereinfachung werden die Differenzwinkel in dem
Klassendetektor 2 in Krümmungsklassen eingeteilt. Es wird
eine sogenannte Klassenliste erstellt. Darin sind alle
Linienpunkte eingetragen, bei denen eine Klassenänderung
erfolgt und die zugehörigen Klassen vermerkt.

Die Klassenänderung wird erkannt durch Vergleich der Inhalte der Speicher 3 und 4 im Komparator 5.

Diese Liste hat zum Beispiel folgende Form:

| Letzter Punkt der Klasse | 3 | 5 | 8 | 9 | 11 | 14 | 16 | 18 | ... |
|---|---|---|---|---|---|---|---|---|---|
| | | | | | | (Adresse) | | | |
| Klasse | 1 | 2 | 3 | 2 | 3 | 1 | 0 | -1 | ... |

Die Adresse der Änderung der beiden jüngsten Elemente der Klassenliste sind in den Speichern 19 und 20 abgelegt, die Art der Änderung in den Speichern 6 und 7 und die Klasse selbst ist im Speicher 12a festgehalten.

Zeichnerisch ist die Klassenliste an dem folgenden Beispiel dargestellt:

Jedes Teilstück (Punkte gleicher Klasse) wird nun nach seiner Umgebung als

|               |   |
|---------------|---|
| steigende Flanke | S |
| fallende Flanke  | F |
| Berg             | B |
| Tal              | T |
| oder Nulldurchgang | N |

eingestuft und kodiert.

Dieser Kode wird als Tendenz bezeichnet und in dem Komparator 8, der von den beiden Änderungsspeichern 6, 7 gesteuert wird, erkannt.

Diese Teilstücke (aufeinanderfolgende Punkte gleicher Klasse) werden nun abhängig von ihrer Klasse, Länge und Tendenz als eigenständig oder nicht eigenständig eingestuft, und zwar durch den Grenzlängenspeicher 9, den Längenzähler 10 und den Komparator 11. Die Tendenz und die Kennzeichnung für eigenständig werden im rechten Teil (12a) des Speichers 12 abgelegt, die zugehörige Klasse im linken Teil (12b).

Teilstücke, die nicht als eigenständig gekennzeichnet sind, dürfen miteinander verschmolzen werden, eigenständige Teile unterschiedlicher Klassen jedoch nicht. Dieser Vorgang erfolgt in der "Segmentpunktentscheidung" 15 und wird später noch erläutert.

Die Mindestlänge für Eigenständigkeit (in Punkten) beträgt beispielsweise

| Klasse<br>Tendenz | 0 | 1 | 2 | 3 | 4 | ab 5 |
|---|---|---|---|---|---|---|
| Flanke | 5 | 5 | 5 | 5 | 5 | 5 |
| Berg | 5 | 5 | 3 | 2 | 1 | 1 |
| Tal | 5 | 5 | 3 | 2 | 2 | 2 |
| Nulldurchgang | 5 | - | - | - | - | - |

In einem jetzt folgenden Zwischenschritt werden noch unmittelbar aufeinanderfolgende Flanken gleicher Art, soweit sie nicht eigenständig sind, zusammengefaßt. Dieser Schritt ist nicht unbedingt explizit erforderlich. Seine Aufgabe wird dann von der "Segmentpunktentscheidung" 15 übernommen.

Damit kann jetzt der eigentliche Segmentiervorgang erfolgen. Die Grundüberlegung ist folgende: Bei Ecken und Übergängen zwischen Kreisen verschiedener Radien sowie Kreisen und Geraden entstehen in der $\Delta\alpha$- und damit auch in der Klassendarstellung Flanken. An diesen Punkten sind also Segmentierungsgrenzen zu setzen.

Der genaue Ablauf läßt sich am einfachsten durch das folgende Flußdiagramm 1 beschreiben:

0163885
84 P 1 3 6 3 E

Die "Segmentgrenze vor Teilstück" wird aus dem Speicher 20 entnommen.

Die "Segmentgrenze nach Teilstück" aus dem Speicher 19.

j = ja, n = nein

Wenn auf den Zwischenschritt zur Zusammenfassung gleichartiger unmittelbar aufeinanderfolgender Flanken verzichtet wird, sieht das Flußdiagramm folgendermaßen aus:

hole nächstes
Teilstück (aus 12a)

steigend    j    n

fallend    j    n

eigenständig    n    j

eigenständig    n    j

vorheriges
Teilstück steigend
oder fallend    j    n

vorheriges
Teilstück fallend
nicht eigenst.    j    n

übernehme Klasse (12b)
in Vergleichsklassen SP(14)

setze Grenze
nach
Teilstück (19)

Lösche Grenze
vor Teilstück (20)

Klasse =
Vergleichsklasse    j    n

vorheriges
Teilstück
steigend    j    n

setze Grenze
nach Teilstück (19)

Teilstück
in 12a
eigenständig    n    j

setze Grenze vor
Teilstück (20)

Klasse-Vergleichsklasse
> 2...    n    j

setze Grenze vor
Teilstück (20)

übernehme Klasse (12b)
in Vergleichsklassen SP(10)

hole nächstes
Teilstück

0163885
84 P 1 3 6 3 E

Als Ergebnis dieser genannten Operationen ist die Linie jetzt in "Segmente" genannte Stücke mit bestimmten Eigenschaften eingeteilt.

In der Anordnung nach der Erfindung laufen die geschilderten Schritte in hintereinander geschalteten jeweils vom Ergebnis der Vorgänger gesteuerten Gruppen ab. In jeder Gruppe wird stets das aktuelle Linienstück mit seiner Umgebung betrachtet.

1. Gruppe: Verarbeitung eines jeden Bildpunktes
(Bausteine 1-5 u. 24)
- Glättung und Bildung von $\Delta\alpha$
- Einteilung $\Delta\alpha$ in Klassen
- Erkennung von Klassenänderungen

2. Gruppe: Verarbeitung von n aufeinanderfolgenden Bildpunkten der gleichen Klasse
(Bausteine 6-11)
- Ermittlung der Klassenlänge n und Einordnung unter Beachtung der Nachbarklassenstücke in steigende oder fallende Kantenstücke, in Berg- oder Talstücke (Tendenz)
- Zuordnung der Eigenständigkeit, wenn die Grenzlänge erreicht ist.

3. Gruppe: Segmentpunktentscheidung
(Bausteine 12-22)
- Zusammenfassen unmittelbar aufeinanderfolgender Stücke gleicher Tendenz
- nochmalige Glättung durch Zusammenfassen nicht eigenständiger Teile
- Segmentpunktentscheidung
- Eintrag der Segmentpunkte.

In der Figur 2 ist gestrichelt noch eine Variante angedeutet, die nach der späteren Auswertung nach Figur 3 eine exakte Bestimmung des Radius ermöglicht. Dabei wird beispielsweise in einem Speicher 25, zum Beispiel PROM, aus dem Differenzwinkel $\Delta\alpha$, dem vorhergehenden Ein-

gangswinkel $\alpha$ und dem ebenfalls in der Linienliste enthaltenen Richtungscode RK der Rasterfehler von $\alpha$ aufgehoben, das heißt die Krümmung der gerasterten Kurve exakt bestimmt. Mathematisch ist die Krümmung der Kehrwert des Krümmungsradius und somit ist der Radius bestimmt. Für diese Variante wird in der Folge in der Segmentierung statt mit $\Delta\alpha$ mit der korrigierten Krümmung gerechnet. Dafür entfällt bei der späteren Berechnung der Mittelwerte die Aufsummierung der Bogenlänge (Figur 3). Bei der Approximation reduziert sich ferner die Radiusberechnung auf die Kehrwertbildung des Mittelswerts von $\Delta\alpha$.

Der Richtungscode gibt an, von welchem vorangehenden Rasterpunkt der Linienpunkt angesteuert wurde. Der Richtungscode entspricht in der Literatur dem Freeman-Ketten-Code und gibt die Richtung der acht Nachbarpunkte eines Punktes in einem orthogonalen Raster an.

Mittelwertbildung:

In der Anordnung nach der Figur 3 erfolgt die Summenbildung, die Maximalwertbestimmung für $\Delta\alpha$ und gegebenenfalls die Mittelwertbildung über eine Segmentlänge. Diese Werte werden für die folgende Klassifizierung und Approximation der Segmente in gerade Stücke, Kreissegmente, Ecken und Teile, die noch nicht hinreichend genau definiert werden können, benötigt.

Aus dem Segmentpunktspeicher 17 von Figur 2 (zum Beispiel RAM) kommen die Segmentgrenzen und parallel dazu über einen Eingangssynchronisationsspeicher 30 (zum Beispiel Register) die zu verarbeitenden Daten. Diese Daten sind der Richtungswinkel $\alpha$ , die Koordinaten x, y und der Verfolgungsrichtungskode. Aus den Eingangsdaten werden jeweils über eine Segmentlänge, die Summen der Koordinaten x, y, über Gatter 31, $\sum \cos\alpha$ (zum Beispiel über PROM 32), $\sum \sin\alpha$, (zum Beispiel über PROM 33),

die $\Sigma$ Bogenlänge (zum Beispiel über PROM 34) und die
Summe des Differenzwinkels $\Delta\alpha$ (zum Beispiel über Register 35, Subtrahierer 36) gebildet. Zusätzlich wird das
Quadrat des Maximums $\Delta\alpha^2$ (PROM 41, Speicher 42, Komparator 43) innerhalb eines Segmentes gesucht. Zur Summenbildung dient ein Addierer 37 in Verbindung mit einem
Akkumulator 38 (zum Beispiel Register). Ein Teil der in
37, 38 gebildeten Summen wird mittels des Zählers 39 und
des Dividierers 40 (zum Beispiel PROM mit Kehrwert des
Zählerstandes und Multiplizierer) auf die Segmentlänge
normiert, das heißt, es wird der Mittelwert über ein Segment gebildet. Eine Puffereintragssteuerung 44 (zum Beispiel Programmable Logic Array) veranlaßt den sukzessiven
Eintrag der gerechneten Werte in die Ausgangsspeicher 47,
48 (RAM). Die Ausgangsspeicher sind als Wechselpuffer geschaltet. Jeder Speicher enthält unter einer Adresse
mehrere Subadressen zur Aufnahme der einzelnen Rechenergebnisse. Er könnte auch in mehrere Bereiche geteilt
sein. Ein Steuerwerk 45 (zum Beispiel ein Mikroprozessor)
steuert den Gesamtablauf und die Auswahl der Eingangsdaten und die Datenwege innerhalb der Schaltung.

Der Funktionsablauf wird am Beispiel der Summe $\sin\alpha$
und von ($\Delta\alpha$ Maximum)$^2$ erläutert:

Die Daten kommen zum Beispiel aus einer Kantenverfolgung
in den Eingangsspeicher 30. Durch das Steuerwerk 45 wird
sichergestellt, daß während der Bildung der $\Sigma \sin\alpha$ der
Richtungswinkel am Eingang von 30 anliegt. Parallel zu
den Daten wird der Segmentpunktspeicher 17 ausgelesen.
Die Daten $\alpha$ aus dem Eingangsspeicher 30 werden in den
PROM 33 in $\sin\alpha$ umgewandelt. Sukzessiv werden aus der
Kantenverfolgung Daten abgeholt, umgewandelt und im
Addierer 37 und Akkumulator 38 aufaddiert. Gleichzeitig
wird der Zähler 39 inkrementiert. Er enthält dadurch
stets die Zahl der bisher aufaddierten Punkte im laufenden Segment.

Im Dividierer 40 wird das Ergebnis der Addition fortlaufend durch den Zählerstand in 39 dividiert. Das Divisionsergebnis wird ständig in einen der Ausgangsspeicher 47 oder 48 eingetragen. Im Ausgangsspeicher steht also immer der zuletzt gerechnete Wert pro Segment. Alle vorher gerechneten Werte werden überschrieben. Bei jeder Segmentgrenze, die vom Speicher 17 geliefert wird, werden der Akkumulator 38 und der Zähler 39 gelöscht. Anschliessend wird die Adresse der Ausgangsspeicher 47 oder 48 erhöht. Selbstverständlich müssen die Zwischenergebnisse nicht ständig in die Ausgangsspeicher eingetragen werden. Dies vereinfacht jedoch die Endbehandlung.

Ähnlich wie der Sinus werden der Cosinus und die Bogenlänge gebildet. Die Bogenlänge $\Delta\alpha$ und die Summe "n" = Länge eines Segmentes wird nicht durch die Segmentlänge, die im Zähler 30 steht, dividiert. Dies wird zum Beispiel dadurch erreicht, daß hierbei ein Zählerstand "1" fest vorgegeben wird.

Die Koordinaten x und y brauchen nicht besonders umgeformt werden. Sie werden über das Gatter 31 direkt auf den Addierer 37 geschaltet.

Die Ermittlung des $(\Delta\alpha_{max})^2$ geschieht zum Beispiel auf folgendem Weg:

Die Eingangsdaten durchlaufen den Synchronisationsspeicher 30 (aktueller Wert). Im Speicher 35 steht der Wert des vorhergehenden Punktes. Der Subtrahierer 36 subtrahiert den aktuellen Wert vom vorhergehenden Wert = $\Delta\alpha$. Das PROM 41 bildet daraus das Quadrat von $\Delta\alpha$. Dieser Wert wird dann in den Maximalwertspeicher 42 übernommen, wenn der aktuelle Betrag $(\Delta\alpha)^2$ größer ist als der Speicherinhalt. Dies wird durch den Komparator 43 festgestellt. Der Eintrag in die Ausgangsspeicher 47, 48 erfolgt wie oben beschrieben. Auch wird bei jeder Segment-

0163885
84 P 1 3 6 3 E

grenze der Maximalwertspeicher gelöscht.

Klassifizierung:

In der Anordnung nach Figur 4 werden die Werte von 47 bzw. 48 von Figur 3 sukzessiv in die Zwischenspeicher 51 bis 54 übernommen. Die Inhalte der Speicher 51 und 52 werden in 55 dividiert und das Divisionsergebnis im Komparator 57 mit der Schwelle in einem Speicher 56 verglichen. Daneben wird der Inhalt des Speichers 52 mit zwei Schwellen im Speicher 58 mittels des Komparators 59 verglichen. Ebenso werden die Inhalte der Speicher 53 und 54 mit den Schwellen in den Speichern 60 bzw. 62 mittels der Komparatoren 61 bzw. 63 verglichen. Die fünf Vergleichsergebnisse aus den Komparatoren 57, 59 (zwei Ausgänge), 61 und 63 werden in einer logischen Schaltung 64 (zum Beispiel frei programmierbarer Speicher oder PROM oder feste logische Verknüpfung) verknüpft. Am Ausgang der Schaltung 64 erscheinen die in den Anordnungen nach Figur 1 und Figur 2 ermittelten Linienstücke zum Beispiel als Gerade, Kreisbogen, Ecke oder undefinierte Teile klassifiziert und werden in dem Segmentpunktspeicher 17, Figur 2, abgelegt. Der Klassifizierungscode ist in Figur 4 beschrieben. Die Schwellen in den Speichern 56, 58, 60 und 62 werden in Abhängigkeit von dem erwarteten Erkennungsergebnis eingestellt.

Die gesamte Schaltung nach Figur 4 führt zum Beispiel den folgenden, im Flußdiagramm dargestellten Klassifikationsalgorithmus durch. Die Schwelle im Speicher 56 wird mit S1, die Schwellen im Speicher 58 mit S2 und S3, die Schwelle im Speicher 60 mit S4 und die Schwelle im Speicher 62 mit S5 bezeichnet.

47, 48 von Fig. 3

$\dfrac{\Sigma \Delta \alpha}{l} > S1$ — N → GERADE

$\Sigma \Delta \alpha < S2$ — N

$\Sigma \Delta \alpha \geqslant S3$ — N → UNBESTIMMT

$l \geqslant S4$ — J

$\dfrac{\Delta \alpha_{MAX}^2}{\Sigma \Delta \alpha} \geqslant S5$ — N

KREIS     ECKE

Verschmelzung:

Die Anordnung nach der Figur 5 dient zur Verschmelzung von in der Anordnung nach Figur 4 klassifizierten Segmenten. Dazu sind drei Speicher 70 - 72 vorgesehen, in die die Segmentklassencodes dreier unmittelbar aufeinanderfolgender Segmente, die in der Schaltung 64 (Figur 4) erzeugt und in 17 (Figur 2) zwischengespeichert wurden, aufnehmen. Die Ausgänge der Speicher 70 - 72 werden in einer Schaltung 73, zum Beispiel Speicher oder PROM, verarbeitet und ergeben einen Hinweis auf eine Rechenvorschrift, die in einem Prozessor 74 abläuft. 75 - 77 sind Speicher für Parametersätze, die den Segmentklassencodespeichern 70 - 72 zugeordnet sind. Ein Schalter 78 gibt die Möglichkeit, den Speicher 72 entweder von den Eingangsdaten oder abhängig vom Ergebnis der Verschmelzungsoperation im Prozessor 74 zu laden. Ebenso kann der Speicher 77 entweder direkt vom Speicher 76 oder vom Prozessor 74 geladen werden.

Die Wirkungsweise der Anordnung nach der Figur 4 wird an einem Beispiel erläutert. Von der Klassifizierung werden beispielsweise folgende Segmente angeliefert, wobei die Reihenfolge vom Startpunkt S aus gegen den Uhrzeigersinn betrachtet wird.

| Gerade | G1 |
| Gerade | G2 |
| Ecke | + E1 |
| Gerade | G3 |
| Ecke | + E2 |
| Gerade | G4 |
| Ecke | + E3 |
| Gerade | G5 |
| Ecke | − E4 |
| Kreis | + K1 |
| Kreis | + K2 |
| Gerade | G6 |

0163885 E
84 P 1 3 6 3

Zu Beginn der Operation sind die Speicher 70 - 72 gelöscht. Die einzelnen Segmente werden nach Art eines Schieberegisters durch die Speicher durchgeschoben. Die Bearbeitung beginnt sobald alle Speicher gefüllt sind.

Das ist im gegebenen Beispiel der Fall, wenn in dem Speicher 70 die Ecke E1, in 71 die Gerade G2 und in 72 die Gerade G1 abgespeichert ist. Die zugehörigen Parametersätze stehen in den Speichern 75 - 77 und zwar für E1 in 75, für G2 in 76 und für G1 in 77. Nun wird geprüft, ob in den Speichern 70 - 72 zu einer Verschmelzung geeignete Segmente eingespeichert sind. Hierzu liegen am Ausgang jedes Speichers die Klassifizierungscode an, die zum Beispiel aus jeweils 2-Bit bestehen (siehe Klassifizierungscode im Zusammenhang mit der Beschreibung zu Figur 4). Die drei Code adressieren den Speicher 73, in dem in der adressierten Speicherzelle eine weitere Adresse abgespeichert ist, die zur gültigen Verarbeitungsvorschrift für den vorliegenden Fall im Programmspeicher des Prozessors 74 führt. Der Speicher 73 kann natürlich auch als logische Verknüpfung realisiert werden.

Die Verarbeitungsvorschriften im Prozessor 74 prüfen in der Regel das mittlere Segment (Speicher 71) mit seinen Nachbarsegmenten (70, 72) auf die Möglichkeit der Verschmelzung. Im vorliegenden Fall G1 G2 E1 lautet die Vorschrift zum Beispiel: die Gerade G1 und die Gerade G2 auf Verschmelzbarkeit zu prüfen, das heißt, mit den Parametern ist aus 76, 77 ein neues Segment zu bilden. Dann wird untersucht, ob dieses neue Segment noch den Geraden-Kriterien in diesem Beispiel nach Anordnung 4 entspricht. Ist dies der Fall, so werden die Geraden G1 und G2 zusammengefaßt. Wird das Kriterium für die Geraden hingegen nicht erfüllt, dann bleiben die ursprünglichen Segmente erhalten.

0163885

Im Fall der Verschmelzung wird der Schalter 78 in die strichlierte Position umgelegt und der Speicher 72 gegebenenfalls mit einem neuen Klassifizierungscode aus dem Prozessor 74 neu beschrieben und die zusammengefaßten Parameter der beiden ursprünglichen Segmente G1 G2 in den Speicher 77 übernommen. Gleichzeitig wird ein neues Element in den Speicher 70 nachgeholt und der alte Inhalt des Speichers 70 in 71 übernommen. Der bisherige Inhalt von 71 ist dadurch überschrieben worden. Im vorliegenden Fall steht im Speicher 72 nach der Verschmelzung der gleiche Code wie vorher, weil zwei Gerade zu einer Geraden verschmolzen worden sind. Analog dazu werden die Speicher 75 - 76 für die Parametersätze behandelt.

Bei dem gewählten Beispiel steht jetzt die Kombination G1-2 in 72, E1 in 71 und G3 in 70. Im jetzt vorliegenden Fall lautet die Vorschrift nicht zu verschmelzen. Der Schalter 78 wird in die senkrechte Stellung gebracht und die Schieberegisterfunktion wieder hergestellt. Der Prozessor 74 veranlaßt damit, daß in die Speicher 70 bzw. 75 ein neues Segment übernommen wird und aus den Speichern 72 bzw. 77 ein Segment zur weiteren Verarbeitung abgegeben wird.

In analoger Weise werden die restlichen Segmente untersucht. Eine neue Verschmelzung wird erst vorgenommen, wenn das Segment K2 im Speicher 71 bzw. 76 und K1 im Speicher 72 bzw. 77 und G6 in 70 bzw. 75 steht. Beim Kreis wird zum Beispiel geprüft, ob die Krümmungen innerhalb einer bestimmten Toleranz übereinstimmen. Ist dies der Fall, dann werden die beiden Segmente verschmolzen. Wenn die Krümmungen nicht übereinstimmen, bleiben sie getrennt.

Bei den undefinierten Segmenten nach Anordnung 4 handelt es sich um kurze, schwach gekrümmte Linienstücke, die nicht eindeutig klassifiziert werden können. Sie werden stets mit Nachbarsegmenten verschmolzen. Am Ende der Verschmelzungsoperation sind keine unbestimmten Segmente mehr vorhanden.

Eine weitere Möglichkeit der Parameterberechnung von zu verschmelzenden Segmenten geht folgendermaßen vor sich: Aus dem Segmentspeicher 17 wird die Grenzmarkierung zwischen zwei verschmolzenen Segmenten gelöscht und nach Abschluß der Verschmelzungsoperation ein neuer Rechenvorgang für diese Linie in der Anordnung nach Figur 3 mit diesen neuen Grenzen gestartet.

<u>Approximation:</u>

Eine Anordnung zur Approximation ist schematisch in der Figur 6 dargestellt. Das Ziel dieser Approximation ist es, die ermittelten Liniensegmente in möglichst einfacher mathematischer Form darzustellen. Die Eingangsdaten für die Approximation sind in den Ausgangsspeichern 47, 48 (Figur 2, Segmentparameter) bzw. 17 (Figur 1, Klassifizierungscode) enthalten. Mit 80 ist ein Rechenwerk oder eine Tabelle bezeichnet, mit 81 ebenfalls ein Rechenwerk und mit 82 ein weiteres Rechenwerk. Die Rechenwerke 81 und 82 werden über einen Schalter 83 bei Bedarf zugeschaltet. 84 ist ein Speicher zur Aufnahme der berechneten Werte.

Bei dieser Anordnung werden Gerade durch ihre Mittelpunktskoordinaten $\frac{\sum x}{n}$ , $\frac{\sum y}{n}$ , durch ihre Orientierung arctan $\frac{\sum \sin \alpha}{\sum \cos \alpha}$ und ihre Länge bestimmt. Dabei wird aus dem Parametersatz (enthalten in 47, 48) nur die Orientierung zusätzlich mittels des Rechenwerks 80 ermittelt.

Ecken werden dargestellt durch $\frac{\sum x}{n}$ , $\frac{\sum y}{n}$ , durch die Orientierung arctan $\frac{\sum \sin \alpha}{\sum \cos \alpha}$ und ihren Öffnungswinkel $\sum \Delta \alpha$. Dabei wird aus dem Parametersatz (enthalten in 47, 48) ebenfalls nur die Orientierung zusätzlich mit dem Rechenwerk 80 ermittelt.

Kreissegmente werden dargestellt durch ihre Mittelpunktkoordinaten, durch den Radius, durch die Orientierung arctan $\frac{\Sigma \sin \alpha}{\Sigma \cos \alpha}$ und ihren Öffnungswinkel $\Sigma \Delta\alpha$. Wenn im Speicher 17 ein Segment als Kreissegment klassifiziert wurde, dann werden zusätzlich über den Schalter 83 die Rechenwerke für Radius 81 und Mittelpunkt 82 zugeschaltet. Der Radius wird nach folgender Formel berechnet:

$$r = \frac{180}{\pi} \cdot \frac{\text{Bogenlänge}}{\Sigma \Delta \alpha}$$

Die Mittelpunktskoordinaten errechnen sich zu:

$$x_M = \frac{\Sigma x}{n} - r \cdot \frac{\Sigma \cos \alpha}{n}$$

$$y_M = \frac{\Sigma y}{n} - r \cdot \frac{\Sigma \sin \alpha}{n}$$

Die endgültigen Parameter werden zum Teil aus dem Parametersatz in 47 und 48 direkt in den Speicher 84 übernommen und zum Teil von den Rechenwerken 80 - 82 in den Speicher 84 eingeschrieben und stehen dann geordnet nach Typ zur weiteren Verarbeitung zur Verfügung.

Das Steuerwerk 85 dient zur Durchschaltung der Datenwege und Zuordnung des Speichers 84. Es ist zum Beispiel durch programmierbare Bauelemente und Speicher oder durch einen Mikroprozessor realisiert.

6 Patentansprüche
6 Figuren

0163885
84 P 1 3 6 3 E

Patentansprüche

1. Anordnung zur Segmentierung, Klassifizierung und Approximation von Linien, die durch eine Punktfolge gegeben sind und wobei jeder Punkt durch seine räumlichen Koordinaten und den Richtungswinkel bestimmt ist, d a - d u r c h g e k e n n z e i c h n e t , daß zur Bestimmung der Abschnitte einer Linie Differenzierer, Komparatoren, Speicher, Zähler und/oder Prozessoren vorgesehen sind, daß zur Klassifizierung dieser Abschnitte ein Rechenwerk zum Summieren, zur Bildung von Extremwerten und/oder Prozessoren angeordnet ist, daß gegebenenfalls zu einer Verschmelzung Komparatoren, Speicher und arithmetische Elemente dienen und zur Approximation der damit bestimmten Segmente Summierer, Dividierer, Speicher und/oder Prozessoren vorgesehen sind (Figur 1).

2. Anordnung zur Segmentierung nach Anspruch 1, d a - d u r c h g e k e n n z e i c h n e t , daß ein Differenzierer (1) vorgesehen ist, an den sich ein Komparator anschließt, auf den ein weiterer Differenzierer mit einem Komparator folgt, daß parallel dazu ein Klassenlängenzähler angeordnet ist, daß an den vorangehenden Komparator (Klassenänderungkomparator) sich ein Tendenzdetektor anschließt, parallel zu diesen ein Grenzlängenspeicher und ein Längenkomparator (Grenzlängenkomparator) vorhanden ist, daß auf den Tendenzdetektor ein Speicher folgt, der Ausgangsdaten vom Tendenzdetektor, dem Grenzlängenkomparator und Klassenänderungskomparator enthält und damit die Beschreibung eines Linienstückes aufweist, daß darauf ein weiterer, gleichartiger Speicher folgt, der die Beschreibung des vorangehenden Linienstückes enthält, daß sich ferner daran ein Festwertspeicher anschließt, der von den beiden vorangehenden Linienstückspeichern angesteuert wird und mit Hilfe eines eingespeicherten Algorithmus entscheidet, ob die Linienstücke Segmenten entsprechen oder nicht, daß ferner auf den Festwertspeicher ein Segmentpunktspeicher folgt, in dem
die Segmente mit den ermittelten Grenzen eingetragen
werden (Figur 2).

3. Anordnung zur Berechnung der Mittelwerte nach Anspruch 1, d a d u r c h   g e k e n n z e i c h n e t ,
daß ein Subtrahierer zur Winkeldifferenzbildung vorgesehen ist, daß ein Addierwerk zur Summenbildung angeordnet ist und ein Zähler zur Längenbestimmung dient, daß
außerdem ein Speicher und Komparator zur Bestimmung des
maximalen Differenzwinkels und ein Dividierer zur
Mittelwertbildung vorgesehen sind (Figur 3).

4. Anordnung zur Klassifizierung von Linienstücken nach
Anspruch 1, d a d u r c h   g e k e n n z e i c h -
n e t ,   daß Komparatoren (57, 59, 61, 63) zum Vergleich
der gesamten Winkeländerung über ein gegebenes Segment,
zum Vergleich der mittleren Winkeländerung über ein Segment und der maximalen Winkeländerung ihr Vergleich zur
gesamten Änderung innerhalb eines Segmentes sowie Grenzwertspeicher (56, 58, 60, 62), ein Rechenwerk (55) und
eine logische Schaltung (64) zur Klassifizierung der Segmente in Gerade, Kreisstücke, Ecken und noch unbestimmte
Stücke vorgesehen sind.

5. Anordnung zur Verschmelzung von Segmenten nach Anspruch 1, d a d u r c h   g e k e n n z e i c h n e t ,
daß zur Verschmelzung von benachbarten und hinreichend
ähnlichen, klassifizierten Segmenten Speicher (70 - 72),
die zur Aufnahme der Segmentklassencode benachbarter Segmente dienen, einen Speicher (73) adressieren, auf den
ein Prozessor (74) folgt, in dem über das adressierte
Codewort aus dem Speicher (73) eine Rechenvorschrift ausgewählt wird, die aus Parametersätzen in den Speichern
(75 - 77) gegebenenfalls einen neuen Parametersatz
und einen neuen Segmentklassencode erzeugt (Figur 5).

0163885

6. Anordnung zur Approximation von Segmenten nach Anspruch 1, dadurch gekennzeichnet, daß ein Rechenwerk (80) oder eine Winkelfunktionstabelle zur Bestimmung der Steigung bzw. Orientierung von klassifizierten Segmenten sowie gegebenenfalls weitere Rechenwerke (81, 82) zur Bestimmung von Radius und Mittelpunktskoordinaten, ergänzend zu schon vorhandenen Parametern (in 47, 48) sowie ein Steuerwerk (85), das diese Parameter vorzugsweise geordnet in einem Speicher (84) zur weiteren Verarbeitung ablegt, vorgesehen sind (Figur 6).

## FIG 1

Grobsegmentierung | GS |— Fig 2

Berechnung der
Mittelwerte | MWB |— Fig 3

Klassifizierung | KLASS |— Fig 4

Verschmelzung | VER |— Fig 5

Approximation | APP |— Fig 6

FIG 2

## FIG 3

# FIG 4

47, 48 von Fig. 3

51  52  58  53  60  54  62

55  56  59  61  63

57

64

| Gerade | Kreis | Ecke | Unbestimmt |

17 von Fig. 2

Klassifizierungscode

00  Unbestimmt

01  Gerade

10  Kreis

11  Ecke

0163885

# FIG 5

17 von Fig. 2

47, 48 von Fig. 3

70

73

75

71

74

76

78

78

72

77

FIG 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 268 864 (KUBO et al.) <br> * Figur 7; Spalte 7, Zeile 44 - Spalte 8, Zeile 53 * | 1 | G 06 K 9/46 |
| A | | 2,6 | |
| | --- | | |
| A | GB-A-2 108 306 (TOSHIBA) <br><br> * Seite 2, Zeile 55 - Seite 5, Zeile 23 * | 1,2,4-6 | |
| | --- | | |
| A | PROCEEDINGS OF THE IEEE, Computer Society Conference on Pattern Recognition and Image Processing, 14.-17. Juni 1982, Las Vegas, Nevada, US; Seiten 165-170, IEEE; D. D'Amato et al.: "High speed pattern recognition system for alphanumeric handprinted characters" <br> * Seite 167, linke Spalte, Zeile 39 - rechte Spalte, Zeile 33 * | 1-4 | RECHERCHIERTE SACHGEBIETE (Int. Cl.4) <br><br> G 06 K 9/00 |
| | ----- | | |

Der vorliegende Recherchenbericht wurde für alle Patentansprüche erstellt.

| Recherchenort <br> DEN HAAG | Abschlußdatum der Recherche <br> 30-07-1985 | Prüfer <br> SONIUS M.E. |
|---|---|---|